# EUROPEAN PATENT APPLICATION

(11) **EP 2 476 313 A1**
(43) Date of publication of application: **18.07.2012**
(21) Application number: 11150988.1
(22) Date of filing: 14.01.2011
(51) Int. Cl.: A01N 47/14, A01N 47/26, A01P 3/00, A01P 5/00, A01P 7/00

(54) **Synergistic pesticidal compositions comprising a dithiocarbamate and an insecticide**

(71) Applicant: BASF SE, 67056 Ludwigshafen (DE)
(72) Inventor: The designation of the inventor has not yet been filed

(57) **Abstract**

The present invention relates to compositions comprising components (1) and (2), wherein component (1) is selected from a fungicidal compound (I) of the group of dithiocarbamates, and component (2) is selected from an insecticidal compound (II) selected from the groups A) to I).

## Description

The present invention relates to a composition comprising the following components (1) and (2):
(1) a fungicidal compound (I) from the group of dithiocarbamates, selected from metiram, mancozeb, ferbam, maneb, propineb, thiram, zineb und ziram; and
(2) an insecticidal compound (II) selected from the groups A) to I):
   A) Voltage-dependent sodium channel blockers, selected from metaflumizone and indoxacarb;
   B) spinosyns, selected from spinosad and spinetoram;
   C) selective feeding blocker, selected from pymetrozine and flonicamid;
   D) acetylcholinesterase inhibitors, selected from
      D1) carbamates, selected from aldicarb, carbofuran, carbosulfan, methomyl, thiodicarb, alanycarb, bendiocarb, benfuracarb, carbaryl, ethiofencarb, fenoxycarb, furathiocarb, methiocarb, oxamyl, pirimicarb and propoxur; and
      D2) organophosphates, selected from acephate, chlorpyrifos, dimethoate, malathion, methamidophos, profenofos, terbufos, azamethiphos, azinphos-methyl, cadusafos, chlorfenvinphos, diazinon, dichlorvos, dicrotophos disulfoton, ethion, fenitrothion, fenthion, isoxathion, methidathion, methyl-parathion, mevinphos, monocrotophos, oxydemeton-methyl, parathion, phenthoate, phosalone, phorate, phosmet, phosphamidon, phoxim, pirimiphos-methyl, prothiofos, tebupirimfos, tetrachlorvinphos, triazophos and trichlorfon;
         and
      D3) triazamate;
   E) sodium channel modulators, selected from bifenthrin, cypermethrin, alpha-cypermethrin, zeta-cypermethrin, deltamethrin, esfen-valerate, etofenprox, lambda-cyhalothrin, permethrin, tefluthrin, cyfluthrin, acrinathrin, allethrin, cycloprothrin, cyhalothrin, cyphenothrin, beta-cypermethrin, fenpropathrin, fenvalerate, flucythrinate, imiprothrin, prallethrin, pyrethrin I and II, resmethrin, silafluofen, tau-fluvalinate, tetramethrin, tralomethrin, transfluthrin, profluthrin, dimefluthrin and gamma-cyhalothrin,
   F) chloride channel activators, selected from abamectin, emamectin benzoate and milbemectin;
   G) insect growth regulators, selected from flufenoxuron, lufenuron, novaluron, buprofezin, teflubenzuron, methoxyfenozide, chlorfluazuron, cyramazin, diflubenzuron, flucycloxuron, hexaflumuron, triflumuron; diofenolan, hexythiazox, etoxazole, clofentezine, halofenozide, tebufenozide, azadirachtin, pyriproxyfen, methoprene, spirodiclofen, spiromesifen and spirotetramat;
   H) mitochondrial complex I electron transport inhibitors, selected from fenazaquin, fenpyroximate, pyrimidifen, pyridaben, tebufenpyrad and tolfenpyrad;
   I) insectcide, selected from chlorfenapyr, pyrifluquinazon, hydramethylnon and fenbutatin oxide.
wherein component (1) and component (2) are present in a total weight ratio of from 500:1 to 1:500.

Moreover, the invention relates to a method for controlling pests, using the inventive compositions and to the use of component (1) and (2) for preparing such compositions, and also to pesticidal compositions comprising such compositions.

Within the meaning of the present invention the term 'pests' comprises animal pests and phytopathogenic fungi.

In one embodiment, the present invention provides methods for the control of animal pests (such as insects, acarids and/or nematodes) comprising contacting the animal pest (the insect, acarid or nematode) or their food supply, habitat, breeding grounds or their locus with a pesticidally effective amount of an inventive composition.

Moreover, in another embodiment the present invention relates to a method of protecting plants from attack or infestation by animal pests (insects, acarids and/or nematodes) comprising contacting the plant, or the soil or water in which the plant is growing, with a pesticidally effective amount of an inventive composition.

Additionally, the present invention also relates to a method for protecting plant propagation material from harmful insects, arachnids or nematodes comprising contacting the plant propagation material with an inventive composition in pesticidally effective amounts.

Moreover, the invention relates to a method for controlling phytopathogenic fungi using the inventive compositions and to the use of the component (1) and the component (2) for preparing such compositions, and also to pesticidal compositions comprising such compositions.

Additionally, the present invention also comprises a method for protecting plant propagation material from phytopathogenic fungi comprising contacting the plant propagation material with an inventive composition in pesticidally effective amounts.

The present invention further relates to plant-protecting active ingredient compositions having preferably synergistically enhanced action of improving the health of plants and to a method of applying such inventive compositions to the plants.

The compounds of formula (I), (II) as well as their pesticidal action and methods for producing them are generally known. For instance, the commercially available compounds may be found in http://www.alanwood.net/pesticides/. Furthermore, they may be found in The Pesticide Manual, 14th Edition, British Crop Protection Council (2006) among other publications.

However, the specific compositions of the present invention, which are based on the presence of a compound (I) and a compound (II) are not disclosed therein.

One typical problem arising in the field of pest control lies in the need to reduce the dosage rates of the active ingredient in order to reduce or avoid unfavorable environmental or toxicological effects whilst still allowing effective pest control.

Another problem encountered concerns the need to have available pest control agents which are effective against a broad spectrum of pests, e.g. both animal pests and phytopathogenic fungi.

There also exists the need for pest control agents that combine knock-down activity with prolonged control, that is, fast action with long lasting action.

Another difficulty in relation to the use of pesticides is that the repeated and exclusive application of an individual pesticidal compound leads in many cases to a rapid selection of pests, that means animal pests, and phytopathogenic fungi, which have developed natural or adapted resistance against the active compound in question. Therefore there is a need for pest control agents that help prevent or overcome resistance.

It was therefore an object of the present invention to provide pesticidal mixtures which solve the problems outlined above.

It has been found within the framework of the present invention, that this object is in part or in whole achieved by the specific inventive compositions. Especially, it has been found that the inventive compositions show markedly enhanced action against pests compared to the control rates that are possible with the individual compounds when applied to plants, parts of plants, plant propagation materials (preferably seeds), or at their locus of growth.

It has been found that the action of the inventive compositions may go beyond the fungicidal and/or insecticidal action of the active compounds present in the mixture alone.

According to the present invention, compound (I) and the compound (II) may be applied simultaneously, that is jointly or separately, or may be applied successively. This allows enhanced control of pests, which means animal pests and/or phytopathogenic fungi, compared to the control rates that are possible with the individual compounds (synergistic compositions).

According to the present invention, the composition comprises as component (1) a fungicidal compound (I) from the group of dithiocarbamates, selected from ferbam, mancozeb, maneb, metiram, propineb, thiram, zineb und ziram.

According to one embodiment of the present invention, component (1) is selected from mancozeb, maneb, metiram and zineb.

According to another embodiment of the present invention, component (1) is selected from mancozeb and metiram, in particular metiram.

According to the present invention, the composition comprises as component (2) an insecticidal compound (II) selected from the groups (A) to (I):
A) Voltage-dependent sodium channel blockers, selected from metaflumizone and indoxacarb;
B) spinosyns, selected from spinosad and spinetoram;
C) selective feeding blocker, selected from pymetrozine and flonicamid;
D) acetylcholinesterase inhibitors, selected from
   D1) carbamates, selected from aldicarb, carbofuran, carbosulfan, methomyl, thiodicarb, alanycarb, bendiocarb, benfuracarb, carbaryl, ethiofencarb, fenoxycarb, furathiocarb, methiocarb, oxamyl, pirimicarb and propoxur; and
   D2) organophosphates, selected from acephate, chlorpyrifos, dimethoate, malathion, methamidophos, profenofos, terbufos, azamethiphos, azinphos-methyl, cadusafos, chlorfenvinphos, diazinon, dichlorvos, dicrotophos disulfoton, ethion, fenitrothion, fenthion, isoxathion, methidathion, methyl-parathion, mevinphos, monocrotophos, oxydemeton-methyl, parathion, phenthoate, phosalone, phorate, phosmet, phosphamidon, phoxim, pirimiphos-methyl, prothiofos, tebupirimfos, tetrachlorvinphos, triazophos and trichlorfon;
      and
   D3) triazamate;
E) sodium channel modulators, selected from bifenthrin, cypermethrin, alpha-cypermethrin, zeta-cypermethrin, deltamethrin, esfen-valerate, etofenprox, lambda-cyhalothrin, permethrin, tefluthrin, cyfluthrin, acrinathrin, allethrin, cycloprothrin, cyhalothrin, cyphenothrin, beta-cypermethrin, fenpropathrin, fenvalerate, flucythrinate, imiprothrin, prallethrin, pyrethrin I and II, resmethrin, silafluofen, tau-fluvalinate, tetramethrin, tralomethrin, transfluthrin, profluthrin, dimefluthrin and gamma-cyhalothrin,
F) chloride channel activators, selected from abamectin, emamectin benzoate and milbemectin;
G) insect growth regulators, selected from flufenoxuron, lufenuron, novaluron, buprofezin, teflubenzuron, methoxyfenozide, chlorfluazuron, cyramazin, diflubenzuron, flucycloxuron, hexaflumuron, triflumuron; diofenolan, hexythiazox, etoxazole, clofentezine, halofenozide, tebufenozide, azadirachtin, pyriproxyfen, methoprene, spirodiclofen, spiromesifen and spirotetramat;
H) mitochondrial complex I electron transport inhibitors, selected from fenazaquin, fenpyroximate, pyrimidifen, pyridaben, tebufenpyrad and tolfenpyrad;
I) insectcide, selected from chlorfenapyr, pyrifluquinazon, hydramethylnon and fenbutatin oxide.

According to one embodiment of the present invention, component (2) is selected from group A) consisting of metaflumizone and indoxacarb, in particular metaflumizone.

According to one embodiment of the present invention, component (2) is selected from group B) consisting of spinosad and spinetoram, in particular spinosad.

According to another embodiment of the invention, component (2) is selected from group C) consisting of pymetrozine and flonicamid, in particular pymetrozine.

According to another embodiment of the invention, component (2) is selected from group D1) consisting of aldicarb, carbofuran, carbosulfan, methomyl, thiodicarb, alanycarb, bendiocarb, benfuracarb, carbaryl, ethiofencarb, fenoxycarb, furathiocarb, methiocarb, oxamyl, pirimicarb and propoxur.

According to another embodiment of the invention, component (2) is selected from group D2) consisting of acephate, chlorpyrifos, dimethoate, malathion, methamidophos, profenofos, terbufos, azamethiphos, azinphos-methyl, cadusafos, chlorfenvinphos, diazinon, dichlorvos, dicrotophos disulfoton, ethion, fenitrothion, fenthion, isoxathion, methidathion, methyl-parathion, mevinphos, monocrotophos, oxydemeton-methyl, parathion, phenthoate, phosalone, phorate, phosmet, phosphamidon, phoxim, pirimiphos-methyl, prothiofos, tebupirimfos, tetrachlorvinphos, triazophos and trichlorfon.

According to another embodiment of the invention, component (2) is D3) triazamat.

According to another embodiment of the invention, component (2) is selected from group E) consisting of bifenthrin, cypermethrin, alpha-cypermethrin, zeta-cypermethrin, deltamethrin, esfen-valerate, etofenprox, lambda-cyhalothrin, permethrin, tefluthrin, cyfluthrin, acrinathrin, allethrin, cycloprothrin, cyhalothrin, cyphenothrin, beta-cypermethrin, fenpropathrin, fenvalerate, flucythrinate, imiprothrin, prallethrin, pyrethrin I and II, resmethrin, silafluofen, tau-fluvalinate, tetramethrin, tralomethrin, transfluthrin, profluthrin, dimefluthrin and gamma-cyhalothrin, in particular alpha-cypermethrin.

According to another embodiment of the invention, component (2) is selected from group F) consisting of abamectin, emamectin benzoate and milbemectin, in particular abamectin or emamectin benzoate, more particularly abamectin.

According to another embodiment of the invention, component (2) is selected from group G) consisting of flufenoxuron, lufenuron, novaluron, buprofezin, teflubenzuron, methoxyfenozide, chlorfluazuron, cyramazin, diflubenzuron, flucycloxuron, hexaflumuron, triflumuron, diofenolan, hexythiazox, etoxazole, clofentezine, halofenozide, tebufenozide, azadirachtin, pyriproxyfen, methoprene, spirodiclofen, spiromesifen and spirotetramat.

According to another embodiment of the invention, component (2) is selected from group H) consisting of fenazaquin, fenpyroximate, pyrimidifen, pyridaben, tebufenpyrad or tolfenpyrad.

According to another embodiment of the invention, component (2) is selected from group I) consisting of chlorfenapyr, pyrifluquinazon, hydramethylnon and fenbutatin oxide, in particular chlorfenapyr or pyrifluquinazon

According to still another embodiment of the invention, component (2) is selected from the Groups A), B), C), E), F) and I) and the respective preferred embodiments thereof.

In the inventive mixtures, component (1) is selected from the following compounds:
(I)-1 mancozeb
(I)-2 maneb
(I)-3 metiram
(I)-4 zineb

Furthermore, in preferred compositions of the invention, component (2) is selected from compounds (II)-1 to (II)-29:
- (II)-1: abamectin
- (II)-2: acephate
- (II)-3: aldicarb
- (II)-4: alpha-cypermethrin
- (II)-5: bifenthrin
- (II)-6: buprofezin
- (11)-7: carbofuran
- (II)-8: carbosu!fan
- (II)-9: chlorfenapyr
- (II)-10: chlorpyrifos
- (II)-11: cyfluthrin
- (II)-12: cypermethrin
- (II)-13: deltamethrin
- (II)-14: dimethoate
- (II)-15: emamectin benzoate
- (II)-16: esten-valerate
- (II)-17: etofenprox
- (II)-18: fenbutatin oxide
- (II)-19: flonicamid
- (II)-20: flufenoxuron
- (II)-21: hydramethylnon
- (II)-22: indoxacarb
- (II)-23: lambda-cyhalothrin
- (II)-24: lufenuron
- (II)-25: malathion
- (II)-26: metaflumizone
- (II)-27: methamidophos
- (II)-28: methomyl
- (II)-29: methoxyfenozide.
- (II)-30: milbemectin
- (II)-31: novaluron
- (II)-32: permethrin
- (II)-33: profenofos
- (II)-34: pymetrozine
- (II)-35: pyrifluquinazone
- (II)-36: spinetoram
- (11)-37: spinosad
- (II)-38: tebufenpyrad
- (II)-39: teflubenzuron
- (II)-40: tefluthrin
- (II)-41: terbufos
- (II)-42: thiodicarb
- (II)-43: zeta-cypermethrin

Particularly preferred compositions are the binary compositions B1-1 to B1-344 of table B1, wherein each row corresponds to an embodiment of the inventive compositions.

**table B1: Binary compositions comprising as component (1) one of components as given above and a component (2) selected from one of compounds (II)-1 to (II)-43**

| | component | | |
|---|---|---|---|
| composition | (1) | (2) | weight ratio (1): (2) |
| B1-1 | (I)-1 | (II)-1 | 50:1 to 1:50, preferably 20:1 to 1:20, more preferably 10:1 to 1:10 |
| B1-2 | (I)-1 | (II)-2 | 50:1 to 1:50, preferably 20:1 to 1:20, more preferably 10:1 to 1:10 |
| B1-3 | (I)-1 | (II)-3 | 50:1 to 1:50, preferably 20:1 to 1:20, more preferably 10:1 to 1:10 |
| B1-4 | (I)-1 | (II)-4 | 50:1 to 1:50, preferably 20:1 to 1:20, more preferably 10:1 to 1:10 |
| B1-5 | (I)-1 | (II)-5 | 50:1 to 1:50, preferably 20:1 to 1:20, more preferably 10:1 to 1:10 |
| B1-6 | (I)-1 | (II)-6 | 50:1 to 1:50, preferably 20:1 to 1:20, more preferably 10:1 to 1:10 |
| B1-7 | (I)-1 | (II)-7 | 50:1 to 1:50, preferably 20:1 to 1:20, more preferably 10:1 to 1:10 |
| B1-8 | (I)-1 | (II)-8 | 50:1 to 1:50, preferably 20:1 to 1:20, more preferably 10:1 to 1:10 |
| B1-9 | (I)-1 | (II)-9 | 50:1 to 1:50, preferably 20:1 to 1:20, more preferably 10:1 to 1:10 |
| B1-10 | (I)-1 | (II)-10 | 50:1 to 1:50, preferably 20:1 to 1:20, more preferably 10:1 to 1:10 |
| B1-11 | (I)-1 | (II)-11 | 50:1 to 1:50, preferably 20:1 to 1:20, more preferably 10:1 to 1:10 |
| B1-12 | (I)-1 | (II)-12 | 50:1 to 1:50, preferably 20:1 to 1:20, more preferably 10:1 to 1:10 |
| B1-13 | (I)-1 | (II)-13 | 50:1 to 1:50, preferably 20:1 to 1:20, more preferably 10:1 to 1:10 |
| B1-14 | (I)-1 | (II)-14 | 50:1 to 1:50, preferably 20:1 to 1:20, more preferably 10:1 to 1:10 |
| B1-15 | (I)-1 | (II)-15 | 50:1 to 1:50, preferably 20:1 to 1:20, more preferably 10:1 to 1:10 |
| B1-16 | (I)-1 | (II)-16 | 50:1 to 1:50, preferably 20:1 to 1:20, more preferably 10:1 to 1:10 |
| B1-17 | (I)-1 | (II)-17 | 50:1 to 1:50, preferably 20:1 to 1:20, more preferably 10:1 to 1:10 |
| B1-18 | (I)-1 | (II)-18 | 50:1 to 1:50, preferably 20:1 to 1:20, more preferably 10:1 to 1:10 |
| B1-19 | (I)-1 | (II)-19 | 50:1 to 1:50, preferably 20:1 to 1:20, more preferably 10:1 to 1:10 |
| B1-20 | (I)-1 | (II)-20 | 50:1 to 1:50, preferably 20:1 to 1:20, more preferably 10:1 to 1:10 |
| B1-21 | (I)-1 | (II)-21 | 50:1 to 1:50, preferably 20:1 to 1:20, more preferably 10:1 to 1:10 |
| B1-22 | (I)-1 | (II)-22 | 50:1 to 1:50, preferably 20:1 to 1:20, more preferably 10:1 to 1:10 |
| B1-23 | (I)-1 | (II)-23 | 50:1 to 1:50, preferably 20:1 to 1:20, more preferably 10:1 to 1:10 |
| B1-24 | (I)-1 | (II)-24 | 50:1 to 1:50, preferably 20:1 to 1:20, more preferably 10:1 to 1:10 |
| B1-25 | (I)-1 | (II)-25 | 50:1 to 1:50, preferably 20:1 to 1:20, more preferably 10:1 to 1:10 |
| B1-26 | (I)-1 | (II)-26 | 50:1 to 1:50, preferably 20:1 to 1:20, more preferably 10:1 to 1:10 |
| B1-27 | (I)-1 | (II)-27 | 50:1 to 1:50, preferably 20:1 to 1:20, more preferably 10:1 to 1:10 |
| B1-28 | (I)-1 | (II)-28 | 50:1 to 1:50, preferably 20:1 to 1:20, more preferably 10:1 to 1:10 |
| B1-29 | (I)-1 | (II)-29 | 50:1 to 1:50, preferably 20:1 to 1:20, more preferably 10:1 to 1:10 |
| B1-30 | (I)-1 | (II)-30 | 50:1 to 1:50, preferably 20:1 to 1:20, more preferably 10:1 to 1:10 |
| B1-31 | (I)-1 | (II)-31 | 50:1 to 1:50, preferably 20:1 to 1:20, more preferably 10:1 to 1:10 |
| B1-32 | (I)-1 | (II)-32 | 50:1 to 1:50, preferably 20:1 to 1:20, more preferably 10:1 to 1:10 |
| B1-33 | (I)-1 | (II)-33 | 50:1 to 1:50, preferably 20:1 to 1:20, more preferably 10:1 to 1:10 |
| B1-34 | (I)-1 | (II)-34 | 50:1 to 1:50, preferably 20:1 to 1:20, more preferably 10:1 to 1:10 |
| B1-35 | (I)-1 | (II)-35 | 50:1 to 1:50, preferably 20:1 to 1:20, more preferably 10:1 to 1:10 |
| B1-36 | (I)-1 | (II)-36 | 50:1 to 1:50, preferably 20:1 to 1:20, more preferably 10:1 to 1:10 |
| B1-37 | (I)-1 | (II)-37 | 50:1 to 1:50, preferably 20:1 to 1:20, more preferably 10:1 to 1:10 |
| B1-38 | (I)-1 | (II)-38 | 50:1 to 1:50, preferably 20:1 to 1:20, more preferably 10:1 to 1:10 |
| B1-39 | (I)-1 | (II)-39 | 50:1 to 1:50, preferably 20:1 to 1:20, more preferably 10:1 to 1:10 |
| B1-40 | (I)-1 | (II)-40 | 50:1 to 1:50, preferably 20:1 to 1:20, more preferably 10:1 to 1:10 |
| B1-41 | (I)-1 | (II)-41 | 50:1 to 1:50, preferably 20:1 to 1:20, more preferably 10:1 to 1:10 |
| B1-42 | (I)-1 | (II)-42 | 50:1 to 1:50, preferably 20:1 to 1:20, more preferably 10:1 to 1:10 |
| B1-43 | (I)-1 | (II)-43 | 50:1 to 1:50, preferably 20:1 to 1:20, more preferably 10:1 to 1:10 |
| B1-44 | (I)-2 | (II)-1 | 50:1 to 1:50, preferably 20:1 to 1:20, more preferably 10:1 to 1:10 |
| B1-45 | (I)-2 | (II)-2 | 50:1 to 1:50, preferably 20:1 to 1:20, more preferably 10:1 to 1:10 |
| B1-46 | (I)-2 | (II)-3 | 50:1 to 1:50, preferably 20:1 to 1:20, more preferably 10:1 to 1:10 |
| B1-47 | (I)-2 | (II)-4 | 50:1 to 1:50, preferably 20:1 to 1:20, more preferably 10:1 to 1:10 |
| B1-48 | (I)-2 | (II)-5 | 50:1 to 1:50, preferably 20:1 to 1:20, more preferably 10:1 to 1:10 |
| B1-49 | (I)-2 | (II)-6 | 50:1 to 1:50, preferably 20:1 to 1:20, more preferably 10:1 to 1:10 |
| B1-50 | (I)-2 | (II)-7 | 50:1 to 1:50, preferably 20:1 to 1:20, more preferably 10:1 to 1:10 |
| B1-51 | (I)-2 | (II)-8 | 50:1 to 1:50, preferably 20:1 to 1:20, more preferably 10:1 to 1:10 |
| B1-52 | (I)-2 | (II)-9 | 50:1 to 1:50, preferably 20:1 to 1:20, more preferably 10:1 to 1:10 |
| B1-53 | (I)-2 | (II)-10 | 50:1 to 1:50, preferably 20:1 to 1:20, more preferably 10:1 to 1:10 |
| B1-54 | (I)-2 | (II)-11 | 50:1 to 1:50, preferably 20:1 to 1:20, more preferably 10:1 to 1:10 |
| B1-55 | (I)-2 | (II)-12 | 50:1 to 1:50, preferably 20:1 to 1:20, more preferably 10:1 to 1:10 |
| B1-56 | (I)-2 | (II)-13 | 50:1 to 1:50, preferably 20:1 to 1:20, more preferably 10:1 to 1:10 |
| B1-57 | (I)-2 | (II)-14 | 50:1 to 1:50, preferably 20:1 to 1:20, more preferably 10:1 to 1:10 |
| B1-58 | (I)-2 | (II)-15 | 50:1 to 1:50, preferably 20:1 to 1:20, more preferably 10:1 to 1:10 |
| B1-59 | (I)-2 | (II)-16 | 50:1 to 1:50, preferably 20:1 to 1:20, more preferably 10:1 to 1:10 |
| B1-60 | (I)-2 | (II)-17 | 50:1 to 1:50, preferably 20:1 to 1:20, more preferably 10:1 to 1:10 |
| B1-61 | (I)-2 | (II)-18 | 50:1 to 1:50, preferably 20:1 to 1:20, more preferably 10:1 to 1:10 |
| B1-62 | (I)-2 | (II)-19 | 50:1 to 1:50, preferably 20:1 to 1:20, more preferably 10:1 to 1:10 |
| B1-63 | (I)-2 | (II)-20 | 50:1 to 1:50, preferably 20:1 to 1:20, more preferably 10:1 to 1:10 |
| B1-64 | (I)-2 | (II)-21 | 50:1 to 1:50, preferably 20:1 to 1:20, more preferably 10:1 to 1:10 |
| B1-65 | (I)-2 | (II)-22 | 50:1 to 1:50, preferably 20:1 to 1:20, more preferably 10:1 to 1:10 |
| B1-66 | (I)-2 | (II)-23 | 50:1 to 1:50, preferably 20:1 to 1:20, more preferably 10:1 to 1:10 |
| B1-67 | (I)-2 | (II)-24 | 50:1 to 1:50, preferably 20:1 to 1:20, more preferably 10:1 to 1:10 |
| B1-68 | (I)-2 | (II)-25 | 50:1 to 1:50, preferably 20:1 to 1:20, more preferably 10:1 to 1:10 |
| B1-69 | (I)-2 | (II)-26 | 50:1 to 1:50, preferably 20:1 to 1:20, more preferably 10:1 to 1:10 |
| B1-70 | (I)-2 | (II)-27 | 50:1 to 1:50, preferably 20:1 to 1:20, more preferably 10:1 to 1:10 |
| B1-71 | (I)-2 | (II)-28 | 50:1 to 1:50, preferably 20:1 to 1:20, more preferably 10:1 to 1:10 |
| B1-72 | (I)-2 | (II)-29 | 50:1 to 1:50, preferably 20:1 to 1:20, more preferably 10:1 to 1:10 |
| B1-73 | (I)-2 | (II)-30 | 50:1 to 1:50, preferably 20:1 to 1:20, more preferably 10:1 to 1:10 |
| B1-74 | (I)-2 | (II)-31 | 50:1 to 1:50, preferably 20:1 to 1:20, more preferably 10:1 to 1:10 |
| B1-75 | (I)-2 | (II)-32 | 50:1 to 1:50, preferably 20:1 to 1:20, more preferably 10:1 to 1:10 |
| B1-76 | (I)-2 | (II)-33 | 50:1 to 1:50, preferably 20:1 to 1:20, more preferably 10:1 to 1:10 |
| B1-77 | (I)-2 | (II)-34 | 50:1 to 1:50, preferably 20:1 to 1:20, more preferably 10:1 to 1:10 |
| B1-78 | (I)-2 | (II)-35 | 50:1 to 1:50, preferably 20:1 to 1:20, more preferably 10:1 to 1:10 |
| B1-79 | (I)-2 | (II)-36 | 50:1 to 1:50, preferably 20:1 to 1:20, more preferably 10:1 to 1:10 |
| B1-80 | (I)-2 | (II)-37 | 50:1 to 1:50, preferably 20:1 to 1:20, more preferably 10:1 to 1:10 |
| B1-81 | (I)-2 | (II)-38 | 50:1 to 1:50, preferably 20:1 to 1:20, more preferably 10:1 to 1:10 |
| B1-82 | (I)-2 | (II)-39 | 50:1 to 1:50, preferably 20:1 to 1:20, more preferably 10:1 to 1:10 |
| B1-83 | (I)-2 | (II)-40 | 50:1 to 1:50, preferably 20:1 to 1:20, more preferably 10:1 to 1:10 |
| B1-84 | (I)-2 | (II)-41 | 50:1 to 1:50, preferably 20:1 to 1:20, more preferably 10:1 to 1:10 |
| B1-85 | (I)-2 | (II)-42 | 50:1 to 1:50, preferably 20:1 to 1:20, more preferably 10:1 to 1:10 |
| B1-86 | (I)-2 | (II)-43 | 50:1 to 1:50, preferably 20:1 to 1:20, more preferably 10:1 to 1:10 |
| B1-87 | (I)-3 | (II)-1 | 50:1 to 1:50, preferably 20:1 to 1:20, more preferably 10:1 to 1:10 |
| B1-88 | (I)-3 | (II)-2 | 50:1 to 1:50, preferably 20:1 to 1:20, more preferably 10:1 to 1:10 |
| B1-89 | (I)-3 | (II)-3 | 50:1 to 1:50, preferably 20:1 to 1:20, more preferably 10:1 to 1:10 |
| B1-90 | (I)-3 | (II)-4 | 50:1 to 1:50, preferably 20:1 to 1:20, more preferably 10:1 to 1:10 |
| B1-91 | (I)-3 | (II)-5 | 50:1 to 1:50, preferably 20:1 to 1:20, more preferably 10:1 to 1:10 |
| B1-92 | (I)-3 | (II)-6 | 50:1 to 1:50, preferably 20:1 to 1:20, more preferably 10:1 to 1:10 |
| B1-93 | (I)-3 | (II)-7 | 50:1 to 1:50, preferably 20:1 to 1:20, more preferably 10:1 to 1:10 |
| B1-94 | (I)-3 | (II)-8 | 50:1 to 1:50, preferably 20:1 to 1:20, more preferably 10:1 to 1:10 |
| B1-95 | (I)-3 | (II)-9 | 50:1 to 1:50, preferably 20:1 to 1:20, more preferably 10:1 to 1:10 |
| B1-96 | (I)-3 | (II)-10 | 50:1 to 1:50, preferably 20:1 to 1:20, more preferably 10:1 to 1:10 |
| B1-97 | (I)-3 | (II)-11 | 50:1 to 1:50, preferably 20:1 to 1:20, more preferably 10:1 to 1:10 |
| B1-98 | (I)-3 | (II)-12 | 50:1 to 1:50, preferably 20:1 to 1:20, more preferably 10:1 to 1:10 |
| B1-99 | (I)-3 | (II)-13 | 50:1 to 1:50, preferably 20:1 to 1:20, more preferably 10:1 to 1:10 |
| B1-100 | (I)-3 | (II)-14 | 50:1 to 1:50, preferably 20:1 to 1:20, more preferably 10:1 to 1:10 |
| B1-101 | (I)-3 | (II)-15 | 50:1 to 1:50, preferably 20:1 to 1:20, more preferably 10:1 to 1:10 |
| B1-102 | (I)-3 | (II)-16 | 50:1 to 1:50, preferably 20:1 to 1:20, more preferably 10:1 to 1:10 |
| B1-103 | (I)-3 | (II)-17 | 50:1 to 1:50, preferably 20:1 to 1:20, more preferably 10:1 to 1:10 |
| B1-104 | (I)-3 | (II)-18 | 50:1 to 1:50, preferably 20:1 to 1:20, more preferably 10:1 to 1:10 |
| B1-105 | (I)-3 | (II)-19 | 50:1 to 1:50, preferably 20:1 to 1:20, more preferably 10:1 to 1:10 |
| B1-106 | (I)-3 | (II)-20 | 50:1 to 1:50, preferably 20:1 to 1:20, more preferably 10:1 to 1:10 |
| B1-107 | (I)-3 | (II)-21 | 50:1 to 1:50, preferably 20:1 to 1:20, more preferably 10:1 to 1:10 |
| B1-108 | (I)-3 | (II)-22 | 50:1 to 1:50, preferably 20:1 to 1:20, more preferably 10:1 to 1:10 |
| B1-109 | (I)-3 | (II)-23 | 50:1 to 1:50, preferably 20:1 to 1:20, more preferably 10:1 to 1:10 |
| B1-110 | (I)-3 | (II)-24 | 50:1 to 1:50, preferably 20:1 to 1:20, more preferably 10:1 to 1:10 |
| B1-111 | (I)-3 | (II)-25 | 50:1 to 1:50, preferably 20:1 to 1:20, more preferably 10:1 to 1:10 |
| B1-112 | (I)-3 | (II)-26 | 50:1 to 1:50, preferably 20:1 to 1:20, more preferably 10:1 to 1:10 |
| B1-113 | (I)-3 | (II)-27 | 50:1 to 1:50, preferably 20:1 to 1:20, more preferably 10:1 to 1:10 |
| B1-114 | (I)-3 | (II)-28 | 50:1 to 1:50, preferably 20:1 to 1:20, more preferably 10:1 to 1:10 |
| B1-115 | (I)-3 | (II)-29 | 50:1 to 1:50, preferably 20:1 to 1:20, more preferably 10:1 to 1:10 |
| B1-116 | (I)-3 | (II)-30 | 50:1 to 1:50, preferably 20:1 to 1:20, more preferably 10:1 to 1:10 |
| B1-117 | (I)-3 | (II)-31 | 50:1 to 1:50, preferably 20:1 to 1:20, more preferably 10:1 to 1:10 |
| B1-118 | (I)-3 | (II)-32 | 50:1 to 1:50, preferably 20:1 to 1:20, more preferably 10:1 to 1:10 |
| B1-119 | (I)-3 | (II)-33 | 50:1 to 1:50, preferably 20:1 to 1:20, more preferably 10:1 to 1:10 |
| B1-120 | (I)-3 | (II)-34 | 50:1 to 1:50, preferably 20:1 to 1:20, more preferably 10:1 to 1:10 |
| B1-121 | (I)-3 | (II)-35 | 50:1 to 1:50, preferably 20:1 to 1:20, more preferably 10:1 to 1:10 |
| B1-122 | (I)-3 | (II)-36 | 50:1 to 1:50, preferably 20:1 to 1:20, more preferably 10:1 to 1:10 |
| B1-123 | (I)-3 | (II)-37 | 50:1 to 1:50, preferably 20:1 to 1:20, more preferably 10:1 to 1:10 |
| B1-124 | (I)-3 | (II)-38 | 50:1 to 1:50, preferably 20:1 to 1:20, more preferably 10:1 to 1:10 |
| B1-125 | (I)-3 | (II)-39 | 50:1 to 1:50, preferably 20:1 to 1:20, more preferably 10:1 to 1:10 |
| B1-126 | (I)-3 | (II)-40 | 50:1 to 1:50, preferably 20:1 to 1:20, more preferably 10:1 to 1:10 |
| B1-127 | (I)-3 | (II)-41 | 50:1 to 1:50, preferably 20:1 to 1:20, more preferably 10:1 to 1:10 |
| B1-128 | (I)-3 | (II)-42 | 50:1 to 1:50, preferably 20:1 to 1:20, more preferably 10:1 to 1:10 |
| B1-129 | (I)-3 | (II)-43 | 50:1 to 1:50, preferably 20:1 to 1:20, more preferably 10:1 to 1:10 |
| B1-130 | (I)-4 | (II)-1 | 50:1 to 1:50, preferably 20:1 to 1:20, more preferably 10:1 to 1:10 |
| B1-131 | (I)-4 | (II)-2 | 50:1 to 1:50, preferably 20:1 to 1:20, more preferably 10:1 to 1:10 |
| B1-132 | (I)-4 | (II)-3 | 50:1 to 1:50, preferably 20:1 to 1:20, more preferably 10:1 to 1:10 |
| B1-133 | (I)-4 | (II)-4 | 50:1 to 1:50, preferably 20:1 to 1:20, more preferably 10:1 to 1:10 |
| B1-134 | (I)-4 | (II)-5 | 50:1 to 1:50, preferably 20:1 to 1:20, more preferably 10:1 to 1:10 |
| B1-135 | (I)-4 | (II)-6 | 50:1 to 1:50, preferably 20:1 to 1:20, more preferably 10:1 to 1:10 |
| B1-136 | (I)-4 | (II)-7 | 50:1 to 1:50, preferably 20:1 to 1:20, more preferably 10:1 to 1:10 |
| B1-137 | (I)-4 | (II)-8 | 50:1 to 1:50, preferably 20:1 to 1:20, more preferably 10:1 to 1:10 |
| B1-138 | (I)-4 | (II)-9 | 50:1 to 1:50, preferably 20:1 to 1:20, more preferably 10:1 to 1:10 |
| B1-139 | (I)-4 | (II)-10 | 50:1 to 1:50, preferably 20:1 to 1:20, more preferably 10:1 to 1:10 |
| B1-140 | (I)-4 | (II)-11 | 50:1 to 1:50, preferably 20:1 to 1:20, more preferably 10:1 to 1:10 |
| B1-141 | (I)-4 | (II)-12 | 50:1 to 1:50, preferably 20:1 to 1:20, more preferably 10:1 to 1:10 |
| B1-142 | (I)-4 | (II)-13 | 50:1 to 1:50, preferably 20:1 to 1:20, more preferably 10:1 to 1:10 |
| B1-143 | (I)-4 | (II)-14 | 50:1 to 1:50, preferably 20:1 to 1:20, more preferably 10:1 to 1:10 |
| B1-144 | (I)-4 | (II)-15 | 50:1 to 1:50, preferably 20:1 to 1:20, more preferably 10:1 to 1:10 |
| B1-145 | (I)-4 | (II)-16 | 50:1 to 1:50, preferably 20:1 to 1:20, more preferably 10:1 to 1:10 |
| B1-146 | (I)-4 | (II)-17 | 50:1 to 1:50, preferably 20:1 to 1:20, more preferably 10:1 to 1:10 |
| B1-147 | (I)-4 | (II)-18 | 50:1 to 1:50, preferably 20:1 to 1:20, more preferably 10:1 to 1:10 |
| B1-148 | (I)-4 | (II)-19 | 50:1 to 1:50, preferably 20:1 to 1:20, more preferably 10:1 to 1:10 |
| B1-149 | (I)-4 | (II)-20 | 50:1 to 1:50, preferably 20:1 to 1:20, more preferably 10:1 to 1:10 |
| B1-150 | (I)-4 | (II)-21 | 50:1 to 1:50, preferably 20:1 to 1:20, more preferably 10:1 to 1:10 |
| B1-151 | (I)-4 | (II)-22 | 50:1 to 1:50, preferably 20:1 to 1:20, more preferably 10:1 to 1:10 |
| B1-152 | (I)-4 | (II)-23 | 50:1 to 1:50, preferably 20:1 to 1:20, more preferably 10:1 to 1:10 |
| B1-153 | (I)-4 | (II)-24 | 50:1 to 1:50, preferably 20:1 to 1:20, more preferably 10:1 to 1:10 |
| B1-154 | (I)-4 | (II)-25 | 50:1 to 1:50, preferably 20:1 to 1:20, more preferably 10:1 to 1:10 |
| B1-155 | (I)-4 | (II)-26 | 50:1 to 1:50, preferably 20:1 to 1:20, more preferably 10:1 to 1:10 |
| B1-156 | (I)-4 | (II)-27 | 50:1 to 1:50, preferably 20:1 to 1:20, more preferably 10:1 to 1:10 |
| B1-157 | (I)-4 | (II)-28 | 50:1 to 1:50, preferably 20:1 to 1:20, more preferably 10:1 to 1:10 |
| B1-158 | (I)-4 | (II)-29 | 50:1 to 1:50, preferably 20:1 to 1:20, more preferably 10:1 to 1:10 |
| B1-159 | (I)-4 | (II)-30 | 50:1 to 1:50, preferably 20:1 to 1:20, more preferably 10:1 to 1:10 |
| B1-160 | (I)-4 | (II)-31 | 50:1 to 1:50, preferably 20:1 to 1:20, more preferably 10:1 to 1:10 |
| B1-161 | (I)-4 | (II)-32 | 50:1 to 1:50, preferably 20:1 to 1:20, more preferably 10:1 to 1:10 |
| B1-162 | (I)-4 | (II)-33 | 50:1 to 1:50, preferably 20:1 to 1:20, more preferably 10:1 to 1:10 |
| B1-163 | (I)-4 | (II)-34 | 50:1 to 1:50, preferably 20:1 to 1:20, more preferably 10:1 to 1:10 |
| B1-164 | (I)-4 | (II)-35 | 50:1 to 1:50, preferably 20:1 to 1:20, more preferably 10:1 to 1:10 |
| B1-165 | (I)-4 | (II)-36 | 50:1 to 1:50, preferably 20:1 to 1:20, more preferably 10:1 to 1:10 |
| B1-166 | (I)-4 | (II)-37 | 50:1 to 1:50, preferably 20:1 to 1:20, more preferably 10:1 to 1:10 |
| B1-167 | (I)-4 | (II)-38 | 50:1 to 1:50, preferably 20:1 to 1:20, more preferably 10:1 to 1:10 |
| B1-168 | (I)-4 | (II)-39 | 50:1 to 1:50, preferably 20:1 to 1:20, more preferably 10:1 to 1:10 |
| B1-169 | (I)-4 | (II)-40 | 50:1 to 1:50, preferably 20:1 to 1:20, more preferably 10:1 to 1:10 |

| composition | (1) | (2) | weight ratio (1) : (2) |
|---|---|---|---|
| B1-170 | (I)-4 | (II)-41 | 50:1 to 1:50, preferably 20:1 to 1:20, more preferably 10:1 to 1:10 |
| B1-171 | (I)-4 | (II)-42 | 50:1 to 1:50, preferably 20:1 to 1:20, more preferably 10:1 to 1:10 |
| B1-172 | (I)-4 | (II)-43 | 50:1 to 1:50, preferably 20:1 to 1:20, more preferably 10:1 to 1:10 |

According to one embodiment of the invention, within the mixtures of table B1, the following mixtures are especially preferred: B1-19, B1-22, B1-26, B1-34, B1-35, B1-62, B1-65, B1-69, B1-77, B1-78, B1-105, B1-108, B1-112, B1-120, B1-121, B1-148, B1-151, B1-155, B1-163 and B1-164. According to another embodiment, the following mixtures are especially preferred: B1-19, B1-69, B1-105, B1-108, B1-112, B1-120, B1-121 and B1-155.

Each of the inventive mixtures detailled herein may further comprise one or more insecticides, fungicides, herbicides.

The compositions according to the invention are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling phytopathogenic fungi, which inter alia occur in wood or roots of plants.

The compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, the inventive compositions are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with compound (I) and compound (II) and/or a composition comprising said compounds, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield^{®} summer rape (Canola, BASF SE, Germany) being tolerant to imidazolinones, e. g. imazamox, or ExpressSun^{®} sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady^{®} (glyphosate-tolerant, Monsanto, U.S.A.), Cultivance^{®} (imidazolinone tolerant, BASF SE, Germany) and LibertyLink^{®} (glufosinate-tolerant, Bayer CropScience, Germany).

Furthermore, plants are also covered that are by the use of recombinant DNA techniques capable to synthesize one or more insecticidal proteins, especially those known from the bacterial genus Bacillus, particularly from Bacillus thuringiensis, such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard^{®} (corn cultivars producing the Cry1Ab toxin), YieldGard^{®} Plus (corn cultivars producing Cry1Ab and Cry3Bb1 toxins), Starlink^{®} (corn cultivars producing the Cry9c toxin), Herculex^{®} RW (corn cultivars producing Cry34Ab1, Cry35Ab1 and the enzyme Phosphinothricin-N-Acetyltransferase [PAT]); NuCOTN^{®} 33B (cotton cultivars producing the Cry1Ac toxin), Bollgard^{®} I (cotton cultivars producing the Cry1Ac toxin), Bollgard^{@} II (cotton cultivars producing Cry1Ac and Cry2Ab2 toxins); VIPCOT^{®} (cotton cultivars producing a VIP-toxin); NewLeaf^{®} (potato cultivars producing the Cry3A toxin); Bt-Xtra^{®}, NatureGard^{®}, KnockOut^{®}, BiteGard^{®}, Protecta^{®}, Bt11 (e. g. Agrisure^{®} CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against Phytophthora infestans derived from the mexican wild potato Solanum bulbocastanum) or T4-lysozym (e. g. potato cultivars capable of synthesizing these proteins with increased resistance against bacteria such as Erwinia amylvora). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce healthpromoting long-chain omega-3 fatty acids or unsaturated omega-9 fatty acids (e. g. Nexera^{®} rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora^{®} potato, BASF SE, Germany).

The inventive compositions are particularly suitable for controlling the following plant diseases:
Albugo spp. (white rust) on ornamentals, vegetables (e. g. A. candida) and sunflowers (e. g. A. tragopogonis); Alternaria spp. (Alternaria leaf spot) on vegetables, rape (A. brassicola or brassicae), sugar beets (A. tenuis), fruits, rice, soybeans, potatoes (e. g. A. solani or A. alternata), tomatoes (e. g. A. solani or A. alternata) and wheat; Aphanomyces spp. on sugar beets and vegetables; Ascochyta spp. on cereals and vegetables, e. g. A. tritici (anthracnose) on wheat and A. hordei on barley; Bipolaris and Drechslera spp. (teleomorph: Cochliobolus spp.), e. g. Southern leaf blight (D. maydis) or Northern leaf blight (B. zeicola) on corn, e. g. spot blotch (B. sorokiniana) on cereals and e.g. B. oryzae on rice and turfs; Blumeria (formerly Erysiphe) graminis (powdery mildew) on cereals (e. g. on wheat or barley); Botrytis cinerea (teleomorph: Botryotinia fuckeliana: grey mold) on fruits and berries (e. g. strawberries), vegetables (e. g. lettuce, carrots, celery and cabbages), rape, flowers, vines, forestry plants and wheat; Bremia lactucae (downy mildew) on lettuce; Ceratocystis (syn. Ophiostoma) spp. (rot or wilt) on broad-leaved trees and evergreens, e. g. C. ulmi (Dutch elm disease) on elms; Cercospora spp. (Cercospora leaf spots) on corn (e.g. Gray leaf spot: C. zeae-maydis), rice, sugar beets (e. g. C. beticola), sugar cane, vegetables, coffee, soybeans (e. g. C. sojina or C. kikuchii) and rice; Cladosporium spp. on tomatoes (e. g. C. fulvum: leaf mold) and cereals, e. g. C. herbarum (black ear) on wheat; Claviceps purpurea (ergot) on cereals; Cochliobolus (anamorph: Helminthosporium of Bipolaris) spp. (leaf spots) on corn (C. carbonum), cereals (e. g. C. sativus, anamorph: B. sorokiniana) and rice (e. g. C. miyabeanus, anamorph: H. oryzae); Colletotrichum (teleomorph: Glomerella) spp. (anthracnose) on cotton (e. g. C. gossypii), corn (e. g. C. graminicola: Anthracnose stalk rot), soft fruits, potatoes (e. g. C. coccodes: black dot), beans (e. g. C. lindemuthianum) and soybeans (e. g. C. truncatum or C. gloeosporioides); Corticium spp., e. g. C. sasakii (sheath blight) on rice; Corynespora cassiicola (leaf spots) on soybeans and ornamentals; Cycloconium spp., e. g. C. oleaginum on olive trees; Cylindrocarpon spp. (e. g. fruit tree canker or young vine decline, teleomorph: Nectria or Neonectria spp.) on fruit trees, vines (e. g. C. liriodendri, teleomorph: Neonectria liriodendri: Black Foot Disease) and ornamentals; Dematophora (teleomorph: Rosellinia) necatrix (root and stem rot) on soybeans; Diaporthe spp., e. g. D. phaseolorum (damping off) on soybeans; Drechslera (syn. Helminthosporium, teleomorph: Pyrenophora) spp. on corn, cereals, such as barley (e. g. D. teres, net blotch) and wheat (e. g. D. tritici-repentis: tan spot), rice and turf; Esca (dieback, apoplexy) on vines, caused by Formitiporia (syn. Phellinus) punctata, F. mediterranea, Phaeomoniella chlamydospora (earlier Phaeoacremonium chlamydosporum), Phaeoacremonium aleophilum and/or Botryosphaeria obtusa; Elsinoe spp. on pome fruits (E. pyri), soft fruits (E. veneta: anthracnose) and vines (E. ampelina: anthracnose); Entyloma oryzae (leaf smut) on rice; Epicoccum spp. (black mold) on wheat; Erysiphe spp. (powdery mildew) on sugar beets (E. betae), vegetables (e. g. E. pisi), such as cucurbits (e. g. E. cichoracearum), cabbages, rape (e. g. E. cruciferarum); Eutypa lata (Eutypa canker or dieback, anamorph: Cytosporina lata, syn. Libertella blepharis) on fruit trees, vines and ornamental woods; Exserohilum (syn. Helminthosporium) spp. on corn (e. g. E. turcicum); Fusarium (teleomorph: Gibberella) spp. (wilt, root or stem rot) on various plants, such as F. graminearum or F. culmorum (root rot, scab or head blight) on cereals (e. g. wheat or barley), F. oxysporum on tomatoes, F. solani on soybeans and F. verticillioides on corn; Gaeumannomyces graminis (take-all) on cereals (e. g. wheat or barley) and corn; Gibberella spp. on cereals (e. g. G. zeae) and rice (e. g. G. fujikuroi: Bakanae disease); Glomerella cingulata on vines, pome fruits and other plants and G. gossypii on cotton; Grainstaining complex on rice; Guignardia bidwellii (black rot) on vines; Gymnosporangium spp. on rosaceous plants and junipers, e. g. G. sabinae (rust) on pears; Helminthosporium spp. (syn. Drechslera, teleomorph: Cochliobolus) on corn, cereals and rice; Hemileia spp., e. g. H. vastatrix (coffee leaf rust) on coffee; Isariopsis clavispora (syn. Cladosporium vitis) on vines; Macrophomina phaseolina (syn. phaseoli) (root and stem rot) on soybeans and cotton; Microdochium (syn. Fusarium) nivale (pink snow mold) on cereals (e. g. wheat or barley); Microsphaera diffusa (powdery mildew) on soybeans; Monilinia spp., e. g. M. laxa, M. fructicola and M. fructigena (bloom and twig blight, brown rot) on stone fruits and other rosaceous plants; Mycosphaerella spp. on cereals, bananas, soft fruits and ground nuts, such as e. g. M. graminicola (anamorph: Septoria tritici, Septoria blotch) on wheat or M. fijiensis (black Sigatoka disease) on bananas; Peronospora spp. (downy mildew) on cabbage (e. g. P. brassicae), rape (e. g. P. parasitica), onions (e. g. P. destructor), tobacco (P. tabacina) and soybeans (e. g. P. manshurica); Phakopsora pachyrhizi and P. meibomiae (soybean rust) on soybeans; Phialophora spp. e. g. on vines (e. g. P. tracheiphila and P. tetraspora) and soybeans (e. g. P. gregata: stem rot); Phoma lingam (root and stem rot) on rape and cabbage and P. betae (root rot, leaf spot and damping-off) on sugar beets; Phomopsis spp. on sunflowers, vines (e. g. P. viticola: can and leaf spot) and soybeans (e. g. stem rot: P. phaseoli, teleomorph: Diaporthe phaseolorum); Physoderma maydis (brown spots) on corn; Phytophthora spp. (wilt, root, leaf, fruit and stem root) on various plants, such as paprika and cucurbits (e. g. P. capsici), soybeans (e. g. P. megasperma, syn. P. sojae), potatoes and tomatoes (e. g. P. infestans: late blight) and broad-leaved trees (e. g. P. ramorum: sudden oak death); Plasmodiophora brassicae (club root) on cabbage, rape, radish and other plants; Plasmopara spp., e. g. P. viticola (grapevine downy mildew) on vines and P. halstedii on sunflowers; Podosphaera spp. (powdery mildew) on rosaceous plants, hop, pome and soft fruits, e. g. P. leucotricha on apples; Polymyxa spp., e. g. on cereals, such as barley and wheat (P. graminis) and sugar beets (P. betae) and thereby transmitted viral diseases; Pseudocercosporella herpotrichoides (eyespot, teleomorph: Tapesia yallundae) on cereals, e. g. wheat or barley; Pseudoperonospora (downy mildew) on various plants, e. g. P. cubensis on cucurbits or P. humili on hop; Pseudopezicula tracheiphila (red fire disease or ,rotbrenner', anamorph: Phialophora) on vines; Puccinia spp. (rusts) on various plants, e. g. P. triticina (brown or leaf rust), P. striiformis (stripe or yellow rust), P. hordei (dwarf rust), P. graminis (stem or black rust) or P. recondita (brown or leaf rust) on cereals, such as e. g. wheat, barley or rye, P. kuehnii (orange rust) on sugar cane and P. asparagi on asparagus; Pyrenophora (anamorph: Drechslera) tritici-repentis (tan spot) on wheat or P. teres (net blotch) on barley; Pyricularia spp., e. g. P. oryzae (teleomorph: Magnaporthe grisea, rice blast) on rice and P. grisea on turf and cereals; Pythium spp. (damping-off) on turf, rice, corn, wheat, cotton, rape, sunflowers, soybeans, sugar beets, vegetables and various other plants (e. g. P. ultimum or P. aphanidermatum); Ramularia spp., e. g. R. collo-cygni (Ramularia leaf spots, Physiological leaf spots) on barley and R. beticola on sugar beets; Rhizoctonia spp. on cotton, rice, potatoes, turf, corn, rape, potatoes, sugar beets, vegetables and various other plants, e. g. R. solani (root and stem rot) on soybeans, R. solani (sheath blight) on rice or R. cerealis (Rhizoctonia spring blight) on wheat or barley; Rhizopus stolonifer (black mold, soft rot) on strawberries, carrots, cabbage, vines and tomatoes; Rhynchosporium secalis (scald) on barley, rye and triticale; Sarocladium oryzae and S. attenuatum (sheath rot) on rice; Sclerotinia spp. (stem rot or white mold) on vegetables and field crops, such as rape, sunflowers (e. g. S. sclerotiorum) and soybeans (e. g. S. rolfsii or S. sclerotiorum); Septoria spp. on various plants, e. g. S. glycines (brown spot) on soybeans, S. tritici (Septoria blotch) on wheat and S. (syn. Stagonospora) nodorum (Stagonospora blotch) on cereals; Uncinula (syn. Erysiphe) necator (powdery mildew, anamorph: Oidium tuckeri) on vines; Setospaeria spp. (leaf blight) on corn (e. g. S. turcicum, syn. Helminthosporium turcicum) and turf; Sphacelotheca spp. (smut) on corn, (e. g. S. reiliana: head smut), sorghum und sugar cane; Sphaerotheca fuliginea (powdery mildew) on cucurbits; Spongospora subterranea (powdery scab) on potatoes and thereby transmitted viral diseases; Stagonospora spp. on cereals, e. g. S. nodorum (Stagonospora blotch, teleomorph: Leptosphaeria [syn. Phaeosphaeria] nodorum) on wheat; Synchytrium endobioticum on potatoes (potato wart disease); Taphrina spp., e. g. T. deformans (leaf curl disease) on peaches and T. pruni (plum pocket) on plums; Thielaviopsis spp. (black root rot) on tobacco, pome fruits, vegetables, soybeans and cotton, e. g. T. basicola (syn. Chalara elegans); Tilletia spp. (common bunt or stinking smut) on cereals, such as e. g. T. tritici (syn. T. caries, wheat bunt) and T. controversa (dwarf bunt) on wheat; Typhula incarnata (grey snow mold) on barley or wheat; Urocystis spp., e. g. U. occulta (stem smut) on rye; Uromyces spp. (rust) on vegetables, such as beans (e. g. U. appendiculatus, syn. U. phaseoli) and sugar beets (e. g. U. betae); Ustilago spp. (loose smut) on cereals (e. g. U. nuda and U. avaenae), corn (e. g. U. maydis: corn smut) and sugar cane; Venturia spp. (scab) on apples (e. g. V. inaequalis) and pears; and Verticillium spp. (wilt) on various plants, such as fruits and ornamentals, vines, soft fruits, vegetables and field crops, e. g. V. dahliae on strawberries, rape, potatoes and tomatoes.

The inventive compositions are also suitable for controlling phytopathogenic fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following phytopathogenic fungi: Ascomycetes such as Ophiostoma spp., Ceratocystis spp., Aureobasidium pullulans, Sclerophoma spp., Chaetomium spp., Humicola spp., Petriella spp., Trichurus spp.; Basidiomycetes such as Coniophora spp., Coriolus spp., Gloeophyllum spp., Lentinus spp., Pleurotus spp., Poria spp., Serpula spp. and Tyromyces spp., Deuteromycetes such as Aspergillus spp., Cladosporium spp., Penicillium spp., Trichorma spp., Alternaria spp., Paecilomyces spp. and Zygomycetes such as Mucor spp., and in addition in the protection of stored products and harvest the following yeast fungi are worthy of note: Candida spp. and Saccharomyces cerevisae.

According to one specific embodiment, the compositions of the invention are especially suitable in the control of Plasmopara spp., for example P. viticola.

According to a further specific embodiment, the compositions of the invention are especially suitable in the control of Phytophthora spp., for example P. infestans: late blight.

According to still a further specific embodiment, the compositions of the invention are especially suitable in the control of Peronospora spp. (downy mildew), for eample P. brassicae and P. destructor.

According to still a further specific embodiment, the compositions of the invention are especially suitable in the control of leaf spots in various cultivated plants, for example Alternaria spp. (Alternaria leaf spot) A. solani or A. alternata, A. brassicola or brassicae.

According to still a further specific embodiment, the compositions of the invention are especially suitable in the control of Pseudoperonospora (downy mildew) on various plants.

According to a preferred embodiment, the inventive compositions are used for controlling a multitude of fungi on field crops, such as potatoes, rape, legumes; fruits; vines; or vegetables, such as cucumbers, tomatoes, beans or squashes.

Preferred cultivated plants that can be protected and/or cured according to the present invention are vines, potatoes, rapeseed, in particular canola, oilseed-rape, beans, cucumbers, melon, peas, spinach, tomato and watermelon.

The inventive compositions may also be used for improving the health of a plant. The invention also relates to a method for improving plant health by treating a plant, its propagation material and/or the locus where the plant is growing or is to grow with an effective amount of an inventive composition.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress.The above identified indicators for the health condition of a plant may be interdependent or may result from each other.

The compounds (I) and/or (II) can be present in different crystal modifications whose biological activity may differ. Compositions comprising said modifications are likewise subject matter of the present invention.

The application of the inventive compositions can be carried out both before and after the infection of the plants, plant propagation materials, such as seeds, soil, surfaces, materials or rooms by the fungi.

Plant propagation materials may be treated with the inventive compositions prophylactically either at or before planting or transplanting.

The invention also relates to agrochemical compositions comprising a solvent or solid carrier and at least one composition of the invention and to the use for controlling phytopathogenic fungi.

An agrochemical composition comprises a fungicidally effective amount of an inventive composition. The term "fungicidally effective amount" denotes an amount of the composition, which is sufficient for controlling phytopathogenic fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific composition used.

The inventive compositions, comprising a compound (I) and/or a N-oxide or salt thereof and a compound (II) and/or a N-oxide or salt thereof can be converted into customary types of agrochemical compositions, e. g. solutions, emulsions, suspensions, dusts, powders, pastes and granules. The composition type depends on the particular intended purpose; in each case, it should ensure a fine and uniform distribution of the components used according to the invention.

Examples for composition types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF).

Usually the composition types (e. g. SC, OD, FS, EC, WG, SG, WP, SP, SS, WS, GF) are employed diluted. Composition types such as DP, DS, GR, FG, GG and MG are usually used undiluted.

The compositions are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical compositions may also comprise auxiliaries which are customary in agrochemical compositions. The auxiliaries used depend on the particular application form and active substances, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wtters, tackifiers, dispersants or emulsifiers) are alkali metal, alkaline earth metal and ammonium salts of aromatic sulfonic acids, such as ligninsoulfonic acid (Borresperse^{®} types, Borregard, Norway) phenolsulfonic acid, naphthalenesulfonic acid (Morwet^{®} types, Akzo Nobel, U.S.A.), dibutylnaphthalene-sulfonic acid (Nekal^{®} types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol^{®} types, Clariant, Switzerland), polycarboxylates (Sokolan^{®} types, BASF, Germany), polyalkoxylates, polyvinylamines (Lupasol^{®} types, BASF, Germany), polyvinylpyrrolidone and the copolymers therof.

Examples for thickeners (i. e. compounds that impart a modified flowability to compositions, i. e. high viscosity under static conditions and low viscosity during agitation) are polysaccharides and organic and anorganic clays such as Xanthan gum (Kelzan^{®}, CP Kelco, U.S.A.), Rhodopol^{®} 23 (Rhodia, France), Veegum^{®} (R.T. Vanderbilt, U.S.A.) or Attaclay^{®} (Engelhard Corp., NJ, USA).

Bactericides may be added for preservation and stabilization of the composition. Examples for suitable bactericides are those based on dichlorophene and benzylalcohol hemi formal (Proxel^{®} from ICI or Acticide^{®} RS from Thor Chemie and Kathon^{®} MK from Rohm & Haas) and isothiazolinone derivatives such as alkylisothiazolinones and benzisothiazolinones (Acticide^{®} MBS from Thor Chemie).

Examples for suitable anti-freezing agents are ethylene glycol, propylene glycol, urea and glycerin.

Examples for anti-foaming agents are silicone emulsions (such as e. g. Silikon^{®} SRE, Wacker, Germany or Rhodorsil^{®}, Rhodia, France), long chain alcohols, fatty acids, salts of fatty acids, fluoroorganic compounds and mixtures thereof.

Suitable colorants are pigments of low water solubility and water-soluble dyes. Examples to be mentioned are rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose^{®}, Shin-Etsu, Japan).

Powders, materials for spreading and dusts can be prepared by mixing or concomitantly grinding the active compounds with at least one solid carrier.

Granules, e. g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Examples for composition types are:
1. Composition types for dilution with water
   i) Water-soluble concentrates (SL, LS) 10 parts by weight of a composition according to the invention are dissolved in 90 parts by weight of water or in a water-soluble solvent. As an alternative, wetting agents or other auxiliaries are added. The active substances dissolve upon dilution with water. In this way, a composition having a content of 10% by weight of active substances is obtained.
   ii) Dispersible concentrates (DC)
      20 parts by weight of a composition according to the invention are dissolved in 70 parts by weight of cyclohexanone with addition of 10 parts by weight of a dispersant, e. g. polyvinylpyrrolidone. Dilution with water gives a dispersion. The active substances content is 20% by weight.
   iii) Emulsifiable concentrates (EC)
      15 parts by weight of a composition according to the invention are dissolved in 75 parts by weight of xylene with addition of calcium dodecylbenzenesulfonate and castor oil ethoxylate (in each case 5 parts by weight). Dilution with water gives an emulsion. The composition has an active substances content of 15% by weight.
   iv)Emulsions (EW, EO, ES)
      25 parts by weight of a composition according to the invention are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a homogeneous emulsion. Dilution with water gives an emulsion. The composition has an active substances content of 25% by weight.
   v) Suspensions (SC, OD, FS)
      In an agitated ball mill, 20 parts by weight of a composition according to the invention are comminuted with addition of 10 parts by weight of dispersants and wetting agents and 70 parts by weight of water or an organic solvent to give a fine active substances suspension. Dilution with water gives a stable suspension of the active composition. The active substances content in the composition is 20% by weight.
   vi)Water-dispersible granules and water-soluble granules (WG, SG)
      50 parts by weight of a composition according to the invention are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substances. The composition has an active substances content of 50% by weight.
   vii) Water-dispersible powders and water-soluble powders (WP, SP, SS, WS)
      75 parts by weight of a composition according to the invention are ground in a rotorstator mill with addition of 25 parts by weight of dispersants, wetting agents and silica gel. Dilution with water gives a stable dispersion or solution of the active substances. The active substances content of the composition is 75% by weight.
   viii) Gel (GF)
      In an agitated ball mill, 20 parts by weight of a composition according to the invention are comminuted with addition of 10 parts by weight of dispersants, 1 part by weight of a gelling agent wetters and 70 parts by weight of water or of an organic solvent to give a fine suspension of the active substances. Dilution with water gives a stable suspension of the active substances, whereby a composition with 20% (w/w) of active substances is obtained.
2. Composition types to be applied undiluted
   ix)Dustable powders (DP, DS)
      5 parts by weight of a composition according to the invention are ground finely and mixed intimately with 95 parts by weight of finely divided kaolin. This gives a dustable composition having an active substances content of 5% by weight.
   x) Granules (GR, FG, GG, MG)
      0.5 parts by weight of a composition according to the invention is ground finely and associated with 99.5 parts by weight of carriers. Current methods are extrusion, spray-drying or the fluidized bed. This gives granules to be applied undiluted having an active substances content of 0.5% by weight.
   xi)ULV solutions (UL)
      10 parts by weight of a composition according to the invention are dissolved in 90 parts by weight of an organic solvent, e. g. xylene. This gives a composition to be applied undiluted having an active substances content of 10% by weight.

The agrochemical compositions generally comprise between 0.01 and 95%, preferably between 0.1 and 90%, most preferably between 0.5 and 90%, by weight of active substances. The active substances are usually employed in a purity of from 90% to 100%, preferably from 95% to 100% (according to NMR spectrum).

Water-soluble concentrates (LS), flowable concentrates (FS), powders for dry treatment (DS), water-dispersible powders for slurry treatment (WS), water-soluble powders (SS), emulsions (ES) emulsifiable concentrates (EC) and gels (GF) are usually employed for the purposes of treatment of plant propagation materials, particularly seeds. These compositions can be applied to plant propagation materials, particularly seeds, diluted or undiluted. The compositions in question give, after two-to-tenfold dilution, active substances concentrations of from 0.01 to 60% by weight, preferably from 0.1 to 40% by weight, in the ready-to-use preparations. Application can be carried out before or during sowing. Methods for applying the compounds of the inventive compositions on to plant propagation material, especially seeds, are known in the art, and include dressing, coating, pelleting, dusting, soaking and in-furrow application methods of the propagation material. In a preferred embodiment, the compounds of the inventive compositions are applied on to the plant propagation material by a method such that germination is not induced, e. g. by seed dressing, pelleting, coating and dusting.

In a preferred embodiment, a suspension-type (FS) composition is used for seed treatment. Typically, a FS composition may comprise 1-800 g/I of active substances, 1-200 g/I Surfactant, 0 to 200 g/I antifreezing agent, 0 to 400 g/I of binder, 0 to 200 g/I of a pigment and up to 1 liter of a solvent, preferably water.

The active substances of the inventive compositions can be used as such or in the form e. g. directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the active substances used according to the invention.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substances, wetter, tackifier, dispersant or emulsifier and, if appropriate, solvent or oil, and such concentrates are suitable for dilution with water.

The active substances concentrations in the ready-to-use preparations can be varied within relatively wide ranges. In general, they are from 0.0001 to 10%, preferably from 0.001 to 1% by weight of active substances.

The active substances may also be used successfully in the ultra-low-volume process (ULV), it being possible to apply compositions comprising over 95% by weight of active substances, or even to apply the active substances without additives.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substances of from 0.1 to 1000 g, preferably from 1 to 1000 g, more preferably from 1 to 100 g and most preferably from 5 to 100 g, per 100 kilogram of plant propagation material (preferably seed) are generally required.

When used in the protection of materials or stored products, the amount of active substances applied depends on the kind of application area and on the desired effect. Amounts customarily applied in the protection of materials are, e. g., 0.001 g to 2 kg, preferably 0.005 g to 1 kg, of active substances per cubic meter of treated material.

Various types of oils, wetters an/or adjuvants may be added to the active substances or the compositions comprising them, if appropriate not until immediately prior to use (tank mix). These agents can be admixed with the compositions according to the invention in a weight ratio of 1:100 to 100:1, preferably 1:10 to 10:1.

Adjuvants which can be used are in particular organic modified polysiloxanes such as Break Thru S 240^{®}; alcohol alkoxylates such as Atplus 245^{®}, Atplus MBA 1303^{®}, Plurafac LF 300^{®} and Lutensol ON 30^{®}; EO/PO block polymers, e. g. Pluronic RPE 2035^{®} and Genapol B^{®}; alcohol ethoxylates such as Lutensol XP 80^{®}; and dioctyl sulfosuccinate sodium such as Leophen RA^{®}.

In the compositions according to the invention the weight ratio of component (1) and component (2) generally depends from the properties of the active substances used, usually it is in the range of from 1:500 to 500:1, more particularly from 1:100 to 100:1, regularly in the range of from 1:50 to 50:1, preferably in the range of from 1:20 to 20:1, more preferably in the range of from 1:10 to 10:1 1 and in particular in the range of from 1:3 to 3:1. A more specific suitable weight ratio of component (1) to component (2) is 95:1 to 1:95, more preferable 90:1 to 1:90, even more preferable 85:1 to 1:85, even more preferable 80:1 to 1:80, even more preferable 75:1 to 1:75, even more preferable 70:1 to 1:70, even more preferable 65:1 to 1:65, 60:1 to 1:60, even more preferable 55:1 to 1:55, even more preferable 50:1 to 1:50, even more preferable 45:1 to 1:45, even more preferable 30:1 to 1:30, even more preferable 25:1 to 1:25, even more preferable 15:1 to 1:15, even more preferable 10:1 to 1:10, even more preferable 5:1 to 1:5, even more preferable 4:1 to 1:4, even more preferable 3:1 to 1:3, even more preferable 2:1 to 1:2. In particular, the component (1) and the component (2) are used in synergisticaly effective amounts.

In the mixtures and compositions, the compound ratios (e. g. compound I/compound II/compound III ratio) are advantageously chosen so as to produce a synergistic effect.

The term "synergstic effect" is understood to refer in particular to that defined by Colby's formula (Colby, S. R., "Calculating synergistic and antagonistic responses of herbicide combinations", Weeds, 15, pp. 20-22, 1967).

The term "synergistic effect" is also understood to refer to that defined by application of the Tammes method, (Tammes, P. M. L., "Isoboles, a graphic representation of synergism in pesticides", Netherl. J. Plant Pathol. 70, 1964).

The components can be used individually or already partially or completely mixed with one another to prepare the composition according to the invention. It is also possible for them to be packaged and used further as combination composition such as a kit of parts.

In one embodiment of the invention, the kits may include one or more, including all, components that may be used to prepare a subject agrochemical composition. E. g., kits may include one or two of the active substances and/or an adjuvant component. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i. e., not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquor or the agrochemical composition according to the invention is thus obtained. Usually, 50 to 500 liters of the ready-to-use spray liquor are applied per hectare of agricultural useful area, preferably 100 to 400 liters.

According to one embodiment, individual components of the composition according to the invention such as parts of a kit or parts of a binary mixture may be mixed by the user himself in a spray tank and further auxiliaries may be added, if appropriate (tank mix).

In a further embodiment, either individual components of the composition according to the invention or partially premixed components, e. g. components comprising component (1) and/or component (2), may be mixed by the user in a spray tank and further auxiliaries and additives may be added, if appropriate (tank mix). In a further embodiment, either individual components of the composition according to the invention or partially premixed components, e. g. components comprising (1) and/or component (2) can be applied jointly (e..g. after tankmix) or consecutively.

It has been found that the inventive compositions exhibit also advantgeous action against animal pests from the following orders:
insects from the order of the lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis,
beetles (Coleoptera), for example Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus and Sitophilus granaria,
flies, mosquitoes (Diptera), e.g. Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca autumnalis, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga spp., Simulium vittatum, Stomoxys calcitrans, Tabanus bovinus, Tabanus atratus, Tabanus lineola, and Tabanus similis, Tipula oleracea, and Tipula paludosa thrips (Thysanoptera), e.g. Dichromothrips corbetti, Dichromothrips ssp., Frankliniella fusca, Frankliniella occidentalis, Frankliniella tritici, Scirtothrips citri, Thrips oryzae, Thrips palmi and Thrips tabaci,
termites (Isoptera), e.g. Calotermes flavicollis, Leucotermes flavipes, Heterotermes aureus, Reticulitermes flavipes, Reticulitermes virginicus, Reticulitermes lucifugus, Reticulitermes santonensis, Reticulitermes grassei, Termes natalensis, and Coptotermes formosanus,
cockroaches (Blattaria - Blattodea), e.g. Blattella germanica, Blattella asahinae, Periplaneta americana, Periplaneta japonica, Periplaneta brunnea, Periplaneta fuligginosa, Periplaneta australasiae, and Blatta orientalis,
bugs, aphids, leafhoppers, whiteflies, scale insects, cicadas (Hemiptera), e.g. Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Bemisia argentifolii, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzus persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp., and Arilus critatus.
ants, bees, wasps, sawflies (Hymenoptera), e.g. Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Lasius niger, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus spp., Vespula squamosa, Paravespula vulgaris, Paravespula pennsylvanica, Paravespula germanica, Dolichovespula maculata, Vespa crabro, Polistes rubiginosa, Camponotus floridanus, and Linepithema humile,
crickets, grasshoppers, locusts (Orthoptera), e.g. Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera, and Locustana pardalina,
Arachnoidea, such as arachnids (Acarina), e.g. of the families Argasidae, Ixodidae and Sarcoptidae, such as Amblyomma americanum, Amblyomma variegatum, Ambryomma maculatum, Argas persicus, Boophilus annulatus, Boophilus decoloratus, Boophilus microplus, Dermacentor silvarum, Dermacentor andersoni, Dermacentor variabilis, Hyalomma truncatum, Ixodes ricinus, Ixodes rubicundus, Ixodes scapularis, Ixodes holocyclus, Ixodes pacificus, Ornithodorus moubata, Ornithodorus hermsi, Ornithodorus turicata, Ornithonyssus bacoti, Otobius megnini, Dermanyssus gallinae, Psoroptes ovis, Rhipicephalus sanguineus, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and Oligonychus pratensis; Araneida, e.g. Latrodectus mactans, and Loxosceles reclusa,
fleas (Siphonaptera), e.g. Ctenocephalides felis, Ctenocephalides canis, Xenopsylla cheopis, Pulex irritans, Tunga penetrans, and Nosopsyllus fasciatus,
silverfish, firebrat (Thysanura), e.g. Lepisma saccharina and Thermobia domestica,
centipedes (Chilopoda), e.g. Scutigera coleoptrata,
millipedes (Diplopoda), e.g. Narceus spp.,
Earwigs (Dermaptera), e.g. forficula auricularia,
lice (Phthiraptera), e.g. Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus and Solenopotes capillatus.

The compositions according to the invention can be applied to any and all developmental stages of pests, such as egg, larva, pupa, and adult. The pests may be controlled by contacting the target pest, its food supply, habitat, breeding ground or its locus with a pesticidally effective amount of the inventive compositions or pesticidal compositions.

"Locus" means a plant, plant propagation material (preferably seed), soil, area, material or environment in which a pest is growing or may grow.

In general, "pesticidally effective amount" means the amount of the inventive compositions or of pesticidal compositions needed to achieve an observable effect on growth, including the effects of necrosis, death, retardation, prevention, and removal, destruction, or otherwise diminishing the occurrence and activity of the target organism. The pesticidally effective amount can vary for the various inventive compositions. A pesticidally effective amount of the compositions will also vary according to the prevailing conditions such as desired pesticidal effect and duration, weather, target species, locus, mode of application, and the like.

As said above, the present invention also relates to a method for improving the health of plants, wherein the plant, the locus where the plant is growing or is expected to grow or plant propagation material, from which the plant grows, is treated with an plant health effective amount of an inventive mixture.

The term "plant effective amount" denotes an amount of the inventive mixtures, which is sufficient for achieving plant health effects as defined hereinbelow. More exemplary information about amounts, ways of application and suitable ratios to be used is given herein. Anyway, the skilled artisan is well aware of the fact that such an amount can vary in a broad range and is dependent on various factors, e.g. the treated cultivated plant or material and the climatic conditions.

The inventive compositions are employed by treating the fungi or the plants, plant propagation materials (preferably seeds), materials or soil to be protected from fungal attack with a pesticidally effective amount of the active compounds. The application can be carried out both before and after the infection of the materials, plants or plant propagation materials (preferably seeds) by the pests.

In the method of combating phytopathogenic fungi the application rates of the mixtures according to the invention are usually from 0,3 g/ha to 2000 g/ha, preferably 5 g/ha to 2000 g/ha, more preferably from 50 to 900 g/ha, in particular from 50 to 750 g/ha.

In the method of combating animal pests (insects, acarids or nematodes) the application rates of the compositions according to the invention are usually from 0,3 g/ha to 2000 g/ha, preferably 5 g/ha to 2000 g/ha, more preferably from 50 to 900 g/ha, in particular from 50 to 750 g/ha.

The inventive compositions can also be employed for protecting plants from attack or infestation by animal pests (insects, acarids or nematodes) comprising contacting a plant, or soil or water in which the plant is growing.

In the context of the present invention, the term plant refers to an entire plant, a part of the plant or the propagation material of the plant.

The inventive compositions are effective through both contact (via soil, glass, wall, bed net, carpet, plant parts or animal parts), and ingestion (bait, or plant part) and through trophallaxis and transfer.

Preferred application methods are into water bodies, via soil, cracks and crevices, pastures, manure piles, sewers, into water, on floor, wall, or by perimeter spray application and bait.

According to another preferred embodiment of the invention, for use against non crop pests such as ants, termites, wasps, flies, mosquitoes, crickets, locusts, or cockroaches the inventive mixtures are prepared into a bait preparation.

The bait can be a liquid, a solid or a semisolid preparation (e.g. a gel). The bait employed in the composition is a product which is sufficiently attractive to incite insects such as ants, termites, wasps, flies, mosquitoes, crickets etc. or cockroaches to eat it. This attractant may be chosen from feeding stimulants or para and / or sex pheromones readily known in the art.

Methods to control infectious diseases transmitted by insects (e.g. malaria, dengue and yellow fever, lymphatic filariasis, and leishmaniasis) with the inventive mixtures and their respective compositions also comprise treating surfaces of huts and houses, air spraying and impregnation of curtains, tents, clothing items, bed nets, tsetse-fly trap or the like. Insecticidal compositions for application to fibers, fabric, knitgoods, nonwovens, netting material or foils and tarpaulins preferably comprise a composition including the inventive mixtures, optionally a repellent and at least one binder.

The inventive compositions can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

In the case of soil treatment or of application to the pests dwelling place or nest, the quantity of active ingredient ranges from 0.0001 to 500 g per 100 m², preferably from 0.001 to 20 g per 100 m².

Customary application rates in the protection of materials are, for example, from 0.01 g to 1000 g of active compound per m² treated material, desirably from 0.1 g to 50 g per m².

Insecticidal compositions for use in the impregnation of materials typically contain from 0.001 to 95 weight %, preferably from 0.1 to 45 weight %, and more preferably from 1 to 25 weight % of at least one repellent and / or insecticide.

For use in bait compositions, the typical content of active ingredient is from 0.0001 weight % to 15 weight %, desirably from 0.001 weight % to 5% weight % of active compound. The composition used may also comprise other additives such as a solvent of the active material, a flavoring agent, a preserving agent, a dye or a bitter agent. Its attractiveness may also be enhanced by a special color, shape or texture.

For use in spray compositions, the content of the mixture of the active ingredients is from 0.001 to 80 weights %, preferably from 0.01 to 50 weight % and most preferably from 0.01 to 15 weight %.

## Claims

1. A composition comprising the following components (1) and (2):
(1) a fungicidal compound (I) from the group of dithiocarbamates, selected from metiram, mancozeb, ferbam, maneb, propineb, thiram, zineb und ziram; and
(2) an insecticidal compound (II) selected from the groups A) to I):
A) Voltage-dependent sodium channel blockers, selected from metaflumizone and indoxacarb;
B) spinosyns, selected from spinosad and spinetoram;
C) selective feeding blocker, selected from pymetrozine and flonicamid;
D) acetylcholinesterase inhibitors, selected from
D1) carbamates, selected from aldicarb, carbofuran, carbosulfan, methomyl, thiodicarb, alanycarb, bendiocarb, benfuracarb, carbaryl, ethiofencarb, fenoxycarb, furathiocarb, methiocarb, oxamyl, pirimicarb and propoxur;
and
D2) organophosphates, selected from acephate, chlorpyrifos, dimethoate, malathion, methamidophos, profenofos, terbufos, azamethiphos, azinphos-methyl, cadusafos, chlorfenvinphos, diazinon, dichlorvos, dicrotophos disulfoton, ethion, fenitrothion, fenthion, isoxathion, methidathion, methyl-parathion, mevinphos, monocrotophos, oxydemeton-methyl, parathion, phenthoate, phosalone, phorate, phosmet, phosphamidon, phoxim, pirimiphos-methyl, prothiofos, tebupirimfos, tetrachlorvinphos, triazophos and trichlorfon;
and
D3) triazamate;
E) sodium channel modulators, selected from bifenthrin, cypermethrin, alpha-cypermethrin, zeta-cypermethrin, deltamethrin, esfen-valerate, etofenprox, lambda-cyhalothrin, permethrin, tefluthrin, cyfluthrin, acrinathrin, allethrin, cycloprothrin, cyhalothrin, cyphenothrin, beta-cypermethrin, fenpropathrin, fenvalerate, flucythrinate, imiprothrin, prallethrin, pyrethrin I and II, resmethrin, silafluofen, tau-fluvalinate, tetramethrin, tralomethrin, transfluthrin, profluthrin, dimefluthrin and gamma-cyhalothrin,
F) chloride channel activators, selected from abamectin, emamectin benzoate and milbemectin;
G) insect growth regulators, selected from flufenoxuron, lufenuron, novaluron, buprofezin, teflubenzuron, methoxyfenozide, chlorfluazuron, cyramazin, diflubenzuron, flucycloxuron, hexaflumuron, triflumuron; diofenolan, hexythiazox, etoxazole, clofentezine, halofenozide, tebufenozide, azadirachtin, pyriproxyfen, methoprene, spirodiclofen, spiromesifen and spirotetramat;
H) mitochondrial complex I electron transport inhibitors, selected from fenazaquin, fenpyroximate, pyrimidifen, pyridaben, tebufenpyrad and tolfenpyrad;
I) insectcide, selected from chlorfenapyr, pyrifluquinazon, hydramethylnon and fenbutatin oxide.
wherein component (1) and component (2) are present in a total weight ratio of from 500:1 to 1:500.

2. The composition as claimed in claim 1, wherein component (1) is selected from mancozeb, maneb, metiram and zineb.

3. The composition as claimed in 1, wherein component (1) is selected from mancozeb and metiram.

4. The composition as claimed in claim 1, wherein component (1) is metiram.

5. The composition as claimed in any one of claims 1 or 4, wherein component (2) is selected from alpha-cypermethrin, metaflumizone, indoxacarb, chlorfenapyr, pymetrozine, flonicamid and pyrifluquinazone.

6. The composition as claimed in any one of claims 1 to 4, wherein component (2) is chlorfenapyr.

7. The composition as claimed in any one of claims 1 to 4, wherein component (2) is metaflumizone.

8. The composition as claimed in any one of claims 1 to 4, wherein component (2) is alpha-cypermethrin

9. A plant propagation material, comprising the composition as defined in any one of claims 1 to 8 in an amount of from 0.01 g to 10 kg per 100 kg of plant propagation material.

10. A method for controlling pests, which method comprises treating the pest, their habitat, breeding grounds, their locus or the plants to be protected against pest attack, the soil or plant propagation material, with a composition comprising component (1) and component (2) in a total weight ratio of from 500:1 to 1:500, as defined in any one of claims 1 to 8.

11. The method as claimed in claim 10, wherein component (1) and component (2) are applied simultaneously, that is jointly or separately, or in succession.

12. An agrochemical composition, comprising a liquid or solid carrier and a composition as defined in any one of claims 1 to 8.
